# EUROPÄISCHE PATENTANMELDUNG

(11) **EP 0 574 754 A1**
(43) Veröffentlichungstag der Anmeldung: **22.12.1993**
(21) Anmeldenummer: 93108546.8
(22) Anmeldetag: 27.05.1993
(51) Int. Cl.: F02C 3/02

(54) **Gasturbine mit einer Druckwellenmaschine als Energieaustauscher**

(30) Priorität: 19.06.1992 DE 4220073
(71) Anmelder: ASEA BROWN BOVERI AG, CH-5401 Baden (CH)
(72) Erfinder: Althaus, Rolf, Dr., CH-9230 Flawil (CH); Zauner, Erwin, Dr., CH-5400 Baden (CH)
(74) Vertreter: Klein, Ernest

(57) **Zusammenfassung**

Die Verwendung einer Druckwellenmaschine als Energieaustauscher (C) an einer Gasturbinenanlage ermöglicht es dank des sich selbstkühlenden Zellenrades (22) wesentlich höhere Temperaturen anzuwenden. Um diesen Vorteil jedoch voll ausnützen zu können, wird für die Niederdruckgasaustrittskanäle (35, 37) eine Dampfkühlung (13) eingesetzt, ausserdem sind Mittel vorhanden zur Verwertung des erhitzten Kühldampfes in einem Teil der Gasturbine, z.B. in der Brennkammer (D) oder in der Turbine (B).

## Beschreibung

Die Erfindung betrifft eine Gasturbinenanlage gemäss dem Oberbegriff des Patentanspruches 1.

Eine bekannte Druckwellenmaschine für eine Gasturbine dieser Art kann dank des Zellenrades relativ hohe Temperaturen verarbeiten, da im Zellenrad neben einer Verdichtung auch eine Entspannung erfolgt, wodurch das Zellenrad selbstkühlend wirkt. Um die Vorteile der Druckwellenmaschine, nämlich die Anwendung relativ hoher Temperaturen, voll ausnützen zu können, ist es notwendig, einzelne Stellen der Druckwellenmaschine zu kühlen. Bisher wurde dem Verdichter der Gastrubinenanlage Kühlluft für diese Stellen entnommen. Im Niederdruckaustrittskanal der Druckwellenmaschine sind die zu kühlenden Flächen im Vergleich zum Hochdruckeintrittskanal gross. Es wird daher relativ viel Kühlluft benötigt, die dem Verdichter der Basismaschine entnommen werden muss und somit der Druckwellenmaschine nicht zur Verfügung steht, d.h. die Energie der Kühlluft geht dem Potential des Oberstufenprozesses verloren und auch der Wellenleistung sowie dem Wirkungsgrad der Gesamtanlage. Ausserdem kann diese Energie nicht ohne weiteres Zurückgewonnen werden.

Die Aufgabe, welche mit der vorliegenden Erfindung gelöst werden soll, besteht in der Schaffung einer Gasturbinenanlage, bei welcher eine Kühlung des Energieaustauschers mit möglichst kleinem Energieverlust erreicht wird.

Diese Aufgabe wird erfindungsgemäss dadurch gelöst, dass die Anlage ausser den Merkmalen im Oberbegriff auch die Merkmale im Kennzeichen des Patentanspruches 1 aufweist.

Durch die Verwendung von Wasser zum Kühlen ist der Kühlverlust kleiner, da dem Verdichter keine Kühlluft mehr entnommen werden muss. Dies hat den Vorteil, dass einerseits weniger Energie beim Kühlen verloren geht und dass sich andererseits diese verlorene Energie wieder zurückgewinnen lässt, in dem Mittel vorhanden sind zur Verwertung des erwärmten bzw. verdampften Künlwassers.

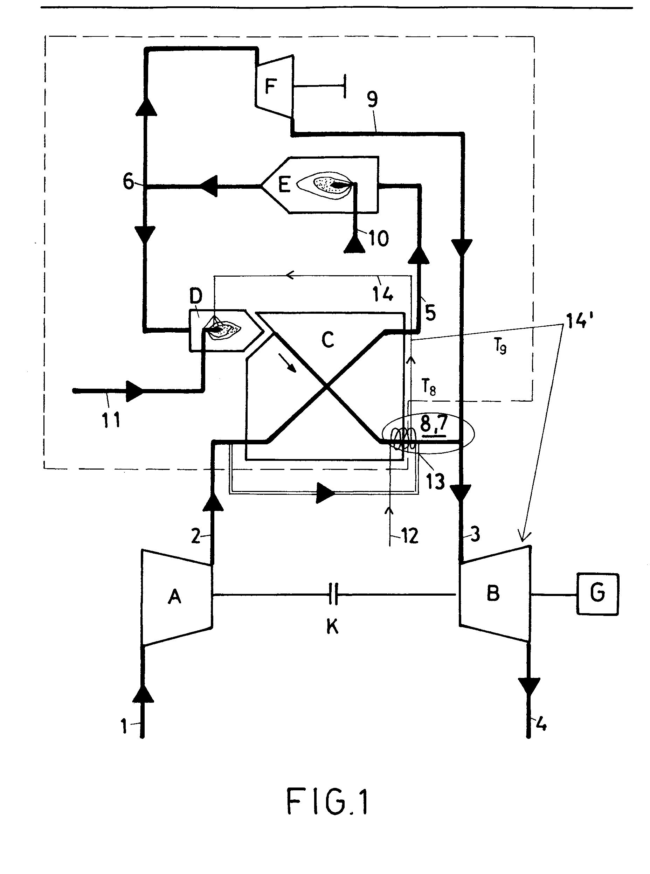

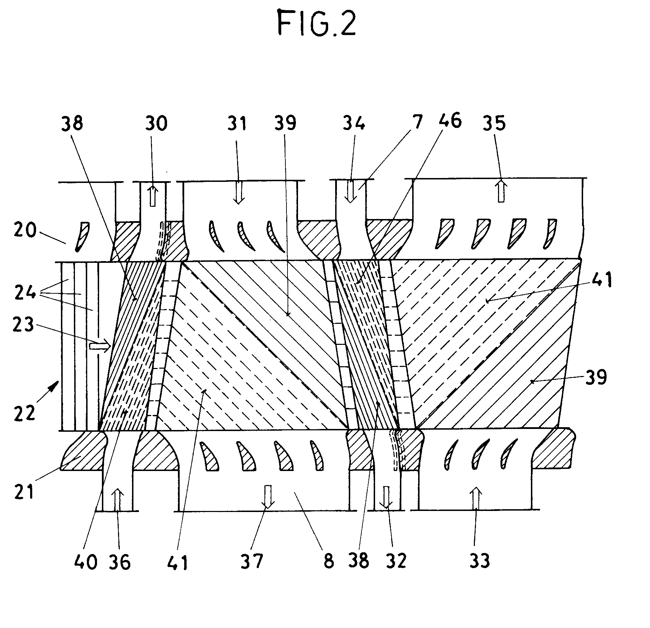

Ein Ausführungsbeispiel der erfindungsgemässen Gasturbinenanlage ist im folgenden anhand der beigefügten Zeichnung ausführlich beschrieben. Es zeigt:
- Fig. 1: eine schematische Darstellung der gesamten Gasturbinenanlage
- Fig. 2: eine Abwicklung eines Zylinderschnittes in halber Höhe der Zellen des Zellenrades und einen Schnitt durch die benachbarten Partien einer Druckwellenmaschine schematisch
Gemäss Fig. 1 ist eine Turbine B über eine Kupplung K mit einem Verdichter A antriebsverbunden. Wie durch Pfeile angedeutet, gelangt durch eine Leitung 1 Druckluft in den Verdichter A. Die verdichtete Druckluft gelangt durch Leitung 2 aus dem Verdichter A in einen Energieaustauscher C, der als Druckwellenmaschine ausgebildet ist, welche anhand der Fig. 2 weiter unten ausführlicher beschrieben ist. Wie ferner durch Pfeile angedeutet, gelangt durch eine Leitung 3 Gas aus dem Energieaustauscher C in die Turbine B. Das aus der Turbine B austretende Gas gelangt in eine Leitung 4. Die Turbine B ist mit einem Generator G antriebsverbunden und ist daher in der Lage, mit dem aus Leitung 3 Gas, sowohl den Verdichter A als auch den Generator G anzutreiben. An den Energieaustauscher C ist ferner über eine Leitung 5 eine Brennkammer E angeschlossen. Durch diese Leitung 5 gelangt die im Energietauscher verdichtete Druckluft in die Brennkammer E. Ueber eine Leitung 10 wird der Brennkammer E Brennstoff zugeführt. Das aus der Brennkammer E durch die Verbrennung erzeugte Gas gelangt durch Leitung 6 einerseits zu einer Hochdruckturbine F und andererseits zu einem Nachbrenner D, der an den Energieaustauscher C angeschlossen ist. Diesem Nachbrenner D wird durch eine Leitung 11 Brennstoff zugeführt. Das aus dem Nachbrenner D austretende Gas wird im Energieaustauscher C entspannt und gelangt über Leitung 3 in die Turbine B. Die aus Leitung 2 in den Energieaustauscher C eintretende Druckluft wird weiter verdichtet, bevor sie über Leitung 5 in die Brennkammer E gelangt. Das aus der Hochdruckturbine F austretende Gas gelangt über Leitung 9 und Leitung 3 in die Basisturbine B. Eine Wasserleitung 12 führt zu einer Austrittsöffnung 13 am Energieaustauscher C, an welcher die Leitung 3 angeschlossen ist. Durch diese Leitung 12 wird Kühldampf zum Kühlen dieser Austrittsöffnung 13 oder dieses Austrittskanals 13 zugeführt. Ueber eine Leitung 14 gelangt Dampf von der Austrittsöffnung 13 zum Nachbrenner D. Die an der Austrittsöffnung benötigte Kühldampfmenge wird anschliessend in den Nachbrenner D eingespritzt. Es ist auch möglich, diesen Dampf in der Turbine B zu verwenden, d.h. der Kühldampf wird über Leitung 14' der Turbine B zugeführt. Der Aufbau des Energieaustauschers C ist anhand der Fig. 2 im folgenden ausführlicher beschrieben:

Zwischen zwei Seitenwänden 20 und 21 befindet sich ein Zellenrad 22, das sich in Richtung des Pfeiles 23 relativ zu den Seitenwänden 20 und 21 bewegt. Dieses Zellenrad 22 besitzt eine Anzahl Zellen 24 die sich gleichmässig über den ganzen Umfang des Zellenrades 22 erstrecken. Von diesen Zellen 24 sind jedoch in der Zeichnung nur drei Zellen 24 dargestellt.

In den beiden Seitenwänden 20 und 21 sind eine Anzahl Eintritts- und Austrittskanäle für die Luft und für das Gas vorgesehen und zwar:
a) Für die Luft
   in der einen Seitenwand 20
   - ein Hochdruckaustrittskanal 30
   - ein Niederdruckeintrittskanal 31
   in der anderen Seitenwand 21
   - ein Hochdruckaustrittskanal 32
   - ein Niederdruckeintrittskanal 33
b) Für das Gas
   in der einen Seitenwand 20
   - ein Hochdruckeintrittskanal 34
   - ein Niederdruckaustrittskanal 35
   in der anderen Seitenwand 21
   - ein Hochdruckeintrittskanal 36
   - ein Niederdruckaustrittskanal 37
Durch Pfeile sind die Eintrittskanäle klar von den Austrittskanälen unterschieden. Die Hochdruckkanäle sind im Vergleich zu den Niederdruckkanälen wesentlich schmäler.

Die Strömungsrichtung der Luft ist durch ausgezogene Pfeile 38 und 39 angedeutet. Die Strömungsrichtung der Gase ist durch gestrichelte Pfeile 40 und 41 angedeutet.

Aus Fig. 2 ist ersichtlich, dass das Gas durch Hochdruckkanäle 34, 36 in den Energieaustauscher eintritt und durch Niederdruckkanäle 35, 37 austritt und das umgekehrt die Luft durch Niederdruckkanäle 31, 33 eintritt und durch Hochdruckkanäle 30, 32 austritt. Dies bedeutet, dass im Energieaustauscher das Gas entspannt und die Luft verdichtet wird. Ein Teil des Gases strömt beim Hochdruckeintrittskanal 34 ein und zum Niederdruckaustrittskanal 35 wieder aus. Ein anderer Teil des Gases strömt beim Hochdruckeintrittskanal 36 ein und zum Niederdruckaustrittskanal 37 aus. Dies bedeutet, dass der eine Teil des Gases sowohl bei der einen Seitenwand 20 ein- und ausströmt und der andere Teil des Gases bei der anderen Seitenwand 21 ein- und ausströmt und dass ein Teil der Luft bei der einen Seitenwand 20 einströmt und bei der anderen Seitenwand 21 ausströmt und dass umgekehrt der andere Teil der Luft bei der anderen Seitenwand 21 einströmt und bei der ersten Seitenwand 20 ausströmt.

Statt Dampf kann für die Kühlung
a) der Niederdruckaustrittskanäle 35, 37
b) der Brennkammer D oder
c) der Basisturbine B
auch Wasser verwendet werden.

| **Bezugsziffern** | |
|---|---|
| A Verdichter | 20 Seitenwand |
| B Basisturbine | 21 Seitenwand |
| C Energieaustauscher | 22 Zellenrad |
| D Nachbrenner | 23 Pfeil |
| E Brennkammer | 24 Zellen |
| F Hochdruck-Turbine | 25 |
| | 26 |
| 1 Verdichtereintritts-Leitung | 27 |
| 2 Verdichteraustritts-Leitung | 28 |
| 3 Turbineneintritts-Leitung | 29 |
| 4 Turbinenaustritts- Leitung | 30 |
| 5 Energietauscheraustritt | 31 |
| 6 Energietauschereintritt | 32 |
| 7 Hochdruckturbinenaustritt | 33 |
| 10 | 34 |
| 11 | 35 |
| 12 | 36 |
| 13 | 37 |
| 14 | 38 |
| | 39 |
| | 40 |
| | 41 |
| | 42 |

## Patentansprüche

1. Gasturbinenanlage, enthaltend:
- eine Turbine (B):
- eine Druckwellenmaschine als Energieaustauscher (C), die an die Turbine (B) angeschlossen ist, mit Hoch- und Niederdruckgas- sowie Luft-Ein- und Austrittskanälen (30-27) sowie einer Kühlung (13) für die Niederdruckgasaustrittskanäle (35, 37) und
- eine Brennkammer (D), welche an die Druckwellenmaschine angeschlossen ist;
gekennzeichnet durch die Verwendung von Wasser oder Dampf für die Kühlung der Niederdruckaustrittskanäle (35, 37) und durch die Verwertung des erhitzten Wassers oder Dampfes in einem Teil der Gasturbine, insbesondere in der Brennkammer (D) oder Turbine (B).

2. Gasturbinenanlage, enthaltend:
- eine Turbine (B):
- eine Druckwellenmaschine als Energieaustauscher (C), die an die Turbine (B) angeschlossen ist, mit Hoch- und Niederdruckgas- sowie Luft-Ein- und Austrittskanälen (30-27) sowie einer Kühlung (13) für die Niederdruckgasaustrittskanäle (35, 37) und
- eine Brennkammer (D), welche an die Druckwellenmaschine angeschlossen ist;
gekennzeichnet durch eine mittels einem flüssigen oder dampfförmigen Kühlmittel arbeitende Kühlung der Niederdruckaustrittskanäle (35, 37) und durch Mittel (14) zur Verwertung des erhitzten flüssigen oder dampfförmigen Kühlmittels in einem Teil der Gasturbine, insbesondere in der Brennkammer (D) oder Turbine (B).

3. Gasturbinenanlage nach Anspruch 1, dadurch gekennzeichnet, dass zur Wiederverwertung des Kühldampfes eine Kühlvorrichtung in der Basisturbine (B) angeordnet ist, welcher der erhitzte Kühldampf zur Kühlung der Basisturbine (B) zugeführt wird.
